# EUROPEAN PATENT SPECIFICATION

(11) **EP 1 535 847 B1**
(45) Date of publication and mention of the grant of the patent: **12.03.2008**
(21) Application number: 03027096.1
(22) Date of filing: 25.11.2003
(51) Int. Cl.: B65B 63/08, B65B 51/30

(54) **Method and apparatus for producing an adhesive product or similar product**
Verfahren und Vorrichtung zur Herstellung eines Klebstoffs oder eines ähnlichen Produkts
Procédé et dispositif pour fabriquer un produit adhésif ou un produit similaire

(43) Date of publication of application: 01.06.2005
(73) Proprietor: NORDSON CORPORATION, Westlake, OH 44145-1119 (US)
(72) Inventor: Leparmentier, Jean-Paul, 77144 Montevrain (FR)
(74) Representative: Eisenführ, Speiser & Partner

(56) References cited:
- EP-A- 0 957 029
- CH-A- 502 224
- GB-A- 1 072 287
- US-A- 3 723 035
- US-A- 5 921 068
- PATENT ABSTRACTS OF JAPAN vol. 2003, no. 07, 3 July 2003 (2003-07-03) -& JP 2003 081227 A (CHENTAI TECHNOLOGY CO LTD), 19 March 2003 (2003-03-19)

## Description

The present invention concerns a method and an apparatus for producing a product, in particular an adhesive product according to the precharacterizing clauses of claims 1 and 17. The present invention also concerns a packaged adhesive product or similar products.

An adhesive product, for example a hot melt adhesive, is most often not used at the place of manufacture. Thus the adhesive product must be packed into suitable shipping containers so that the adhesive product can be shipped from the place of manufacture to the place of use. Therefore, an important function of the shipping container is to keep the means used for transportation and possibly storage from contact with the adhesive product. The shipping container also must be designed so that the adhesive product can be completely removed, i.e., so that it does not adhere to the inside walls of the container.

US Patent 5,373,682 describes a method and an installation of the above type wherein a plastic film is first continuously formed by means of a film bonding device into a hollow tubular body in a filling station for the adhesive product to be packaged. The leading end of the tubular body, in the direction of tube formation, is first contracted into sections by means of constricting rolls, so that the tubular body is closed at one end. The liquid adhesive product is then filled into the tubular body closed at one end. After a certain degree of filling has been achieved, a next section of the continuously formed tubular body is again contracted by the constricting rolls so as to make a separate packet filled with the adhesive product. This packet is cooled at a predetermined temperature before being separated from the continuously formed tubular body.

This disclosed method and installation have the disadvantage that a separate plastic film must be provided for the protective sheath, which must be formed into a hollow tubular body by means of a complicated manufacturing method. Because of this complicated manufacturing method, the filling installation itself must be provided with tooling and/or additional components, which increases the cost of the filling installation.

US Patent 3,469,363 also describes a method and an installation of similar operation and construction to those mentioned in reference to the above US Patent 5,373,682. An essential difference is that the tubular body is not formed from a plastic film, but from two plastic films. Thus the problems explained in reference to US Patent 5,373,582 are doubled.

US 3,723,035 discloses an apparatus for forming hot-melt adhesives into a readily packageable form. The method and apparatus provides for handling of the material in liquid form and extruding it as a stream or continuous flow, cooling the outer surface of the same to solidify it and severing the stream of material with the hardened exterior and liquid interior such that the individual segments severed therefrom seal themselves and from individual pillow-like segments which can be then further cooled to a hardened state and readily handled, packaged, shipped and used.

Published Japanese patent application 6336232 discloses a cooling device for continuous packaging bags and a corresponding method wherein the packaging bags, together with a cooling liquid, are fed into a spiral passage and the continuous packaging bags are pulled out from the spiral passage.

US Patent 3,327,349 describes an extrusion tool that can apply a sheath on the extruded product by means of a co-extrusion process. The material to be sheathed is in a viscous state so that the protective sheath can be applied readily to the adhesive product.

When the extruded product is separated by means of a separation device, the following problems often occur: The outer protective sheath is often deteriorated or damaged by cutting elements such as rotatable knifes. In particular, when the size of the packets is larger, e.g. larger than about 20 mm, then the problems of deterioration of the outer surface or outer sheath often occur. This may result in leakage, so that the inner liquid adhesive material flows out of the protective sheath. In case that the extruded product is immersed into a water bath, then the water is contaminated with adhesive material.

JP-A-2003081227 discloses a packaging method for hotmelt adhesive. The adhesive and a surface protective resin are separately melted by set of a main extruder and a sub-extruder or set of a pump and an extruder. Both the melted resin and adhesive are joined to a common extruding head portion in their pasty state and then the adhesive is directly continuously packed with the cylindrical surface protective resin.

GB-1072287 describes an apparatus used in a continuously operating wrapping machine for transversely sealing and separating a tube of wrapping material containing packaged articles.

The object of the present invention is to provide a method and an apparatus of the type mentioned above that can produce and in particular separate an adhesive product, in particular a sheathed product in a reliable way. Another object of the present invention is to provide an adhesive product of the type mentioned above which can be produced easily and separated in a reliable way.

The object is achieved by the features of claim 1. The invention according to this first aspect allows a very careful or gentle treatment of the product within the separation device. Thanks to the circular movement of the separating element without a change of its angular position, there is no or very little friction between the separating element and the outer surface of the product. The product is preferably formed in a co-extrusion process. For example, a liquid adhesive product and a non-adhesive material are co-extruded and the non-adhesive material forms a protective sheath that is cooled and solidifies after the extrusion step, so that a solidification of the outer sheath material takes place and a solid, but still flexible sheath is formed. The separating element according to the invention smoothly comes into contact with the outer protective sheath and can be moved along the circular path of movement with a velocity that avoids friction, so that the outer protective sheath is not deteriorated or destroyed by this contact. Rather, the extruded product including the protective sheath is constricted, preferably by both sides, so that separated portions of the product are formed and the protective sheath is closed at the end of a portion, so that the liquid adhesive material is encapsulated within the sheath and a separated portion or package is formed. Since the separating element is not changing the angular position, there is no rotational movement within the product that might cause a damage of the sheath or product.

According to a preferred embodiment of the invention, the extrusion tool is situated adjacent to a cooling bath and the liquid product is extruded or co-extruded directly into the bath. The separation device is situated at least partially within the cooling bath, and the extruded product is separated immediately after the extrusion into the water bath. This arrangement allows that in particular product packets of larger size, e.g. thicker than about 20 mm are separated right after the co-extrusion step. This immediate separation after co-extrusion avoids leakages in the protective sheath of co-extruded products which might occur when the separation takes place later after or during a cooling process. Thus, the invention avoids damages or leakages of the sheath. The invention allows a reliable production of closed individual packets by pinching the product and separating individual packets from each other.

In accordance with a further embodiment of the invention the movement of the cutting element of the separating device is adjusted by means of a controlling device depending upon the velocity of the extruded product. The advantage of this adjustment of the movement, in particular the velocity of the cutting element is that the friction or mechanical influence of the separating elements on the extruded product is minimized, so that leakages are very unlikely or can be avoided. This adjustment allows that the separating elements follow the product with the same velocity. An adjustment signal corresponding to the velocity of the extruded product can be achieved from the metering pump or the mass flow of the extruded material which, by taking the cross-section of the extrusion tool into consideration, allows a calculation of the velocity of the extruded product. An another way to achieve a signal that correlates to the velocity of the extruded product would be to use optical sensors.

In a preferred embodiment of the invention, the separating element is mechanically coupled to two rotatable wheels, which are driven synchronously and in the same direction. By using two rotatable wheels, a simple construction is achieved, so that the circular movement without a change in the angular position of the separating elements is achieved.

The structure is further improved when the separation element is coupled to the wheels by means of a support structure, to which the separation element is attached and which is attached to the two wheels. The use of such support structure allows a design of the separation elements which is adapted to the specific application and product. For example, a longish bar could form the separating element and extend in a direction perpendicular to the path of movement of the product. The product can have a flat pillow-like shape, which is separated by a separation element in the form of a bar. It is preferable that the support structure is supported by two wheels at each side and that the separation element extends in a direction perpendicular to the direction of movement of the extruded product. A solid and rigid structure is thus formed.

The separation is preferable achieved with a separation device comprising two cooperating separation elements which are arranged opposite to each other with respect to the extruded product. The two separating elements are moved such that when the constriction of the product takes place, the separating elements approach each other until they contact or nearly contact each other so that a small gap of, for example, 1 mm is formed between the opposing surfaces of the separating element. The outer sheath material is bonded or closed between the separating elements. After the separation, the distance between the separating elements becomes larger and the extruded product is then later separated into further packets. The movement of the two separation elements is synchronized by mechanical and/or electrical and/or electronical means.

In a further preferred embodiment, the at least one separation element is driven by means of a servomotor, preferably a brushless motor. A servomotor is preferred, because during one cycle of the separating element the rotational speed of the motor can be varied, in order to determine and easily adjust the length of a packet of the product, and/or to adjust the speed to the velocity of the product. If the rotational speed is high, then a relatively short package is achieved, whereas a relatively long product is achieved, when the rotational speed is low. The servomotor is usually adjusted so that when the cutting element is in contact with the product the difference between the cutting element and the product is zero or almost zero, so that friction is minimized.

In accordance with another preferred embodiment the separation element is mechanically coupled to elastic spring means, so that the risk that the product sheath is deteriorated is further diminished.

According to another embodiment of the invention, the separation element of the separation device comprises or is coupled to an ultra sound generator, so that the outer sheath material can be subject to a welding process, so that the package is safely closed.

According to yet another preferred embodiment of the invention, the cooling path comprises a plurality of cooling path sections which are arranged at different (vertical) levels. The space which is required for the cooling path can be reduced substantially by such stacked arrangement. The different cooling path sections can easily be installed on top of each other and be attached to a frame structure.

For guiding the product packages a guiding wall having a curved wall is situated between two stacked cooling path sections.

Furthermore it is preferred to provide an embodiment with four rotatable rollers for transporting the separated packets away from the separation device. The rollers may pull the packets away from the separating device.

The object is further achieved by a method with the features of claim 17. A method according to the invention provides the same advantages as described above in connection with the apparatus.

By way of example, a preferred embodiment of the present invention will be described below in reference to the attached drawings, in which:
- Fig. 1: is a side view of an installation or apparatus according to the invention for accomplishing the method according to the invention;
- Fig. 2: is a top view of the installation according to figure 1;
- Fig. 3: is a front view of the installation shown in figure 1;
- Fig. 4: is an enlarged front view of the apparatus according to the invention;
- Fig. 5: is an enlarged further side view of the apparatus according to the invention.
- Fig. 6: is a partial top view of the apparatus according to the invention;
- Fig. 7: is a partial cross-sectional view of a separation device according to the invention;
- Fig. 8: is a top view of the separation device of figure 7;
- Fig. 9: is a side view of the separation device of figure 7;
- Fig. 10: shows a detail of the separating device with separation elements;
- Fig. 11: shows the separating elements and the movement of same in a side view;
- Fig. 12: shows a portion of the apparatus with rollers for transporting the adhesive product.

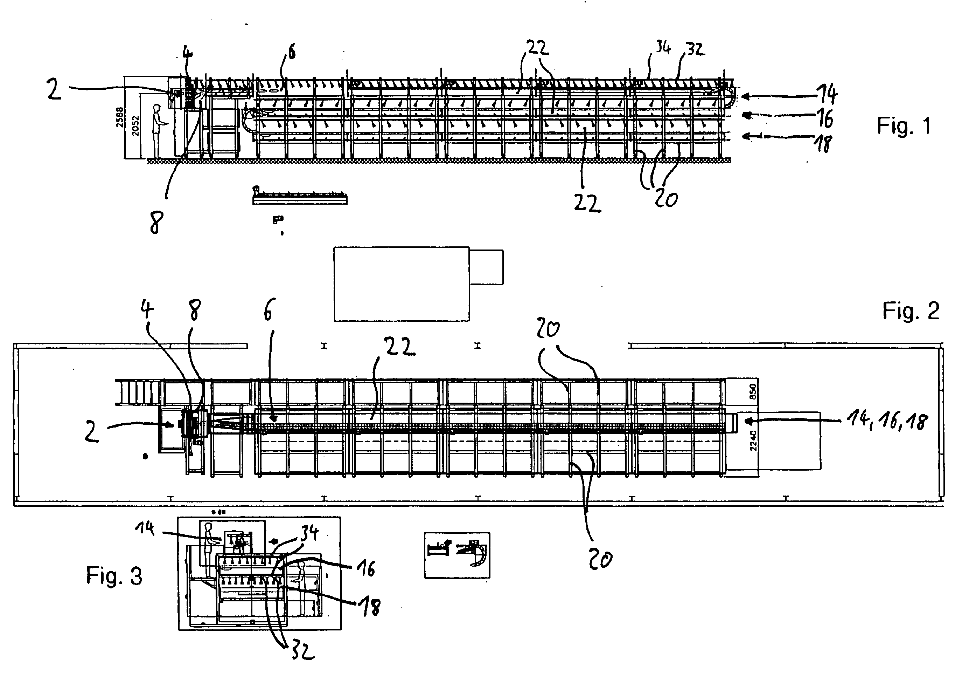

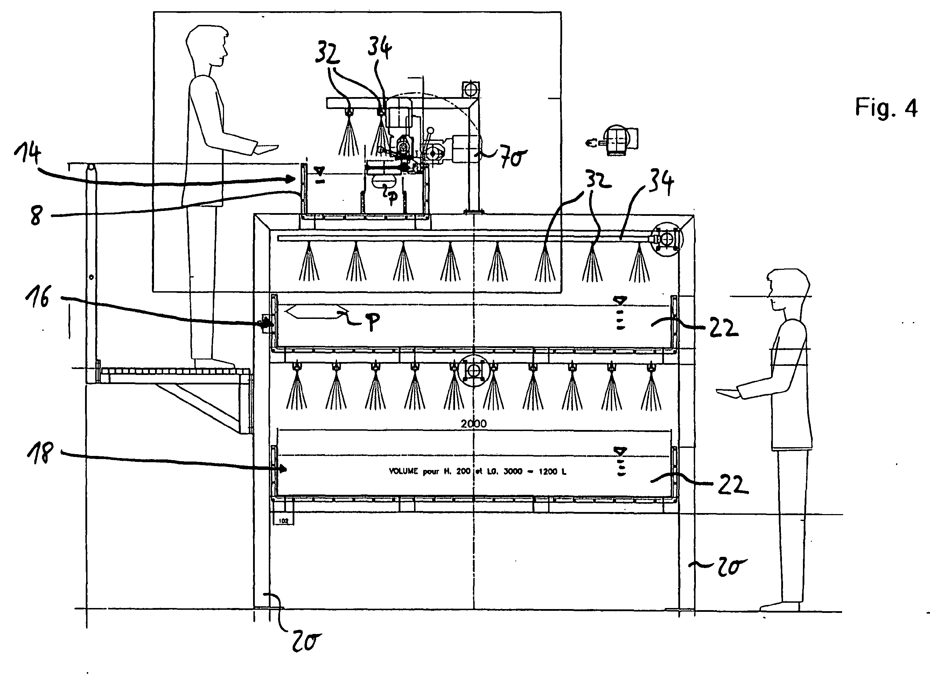

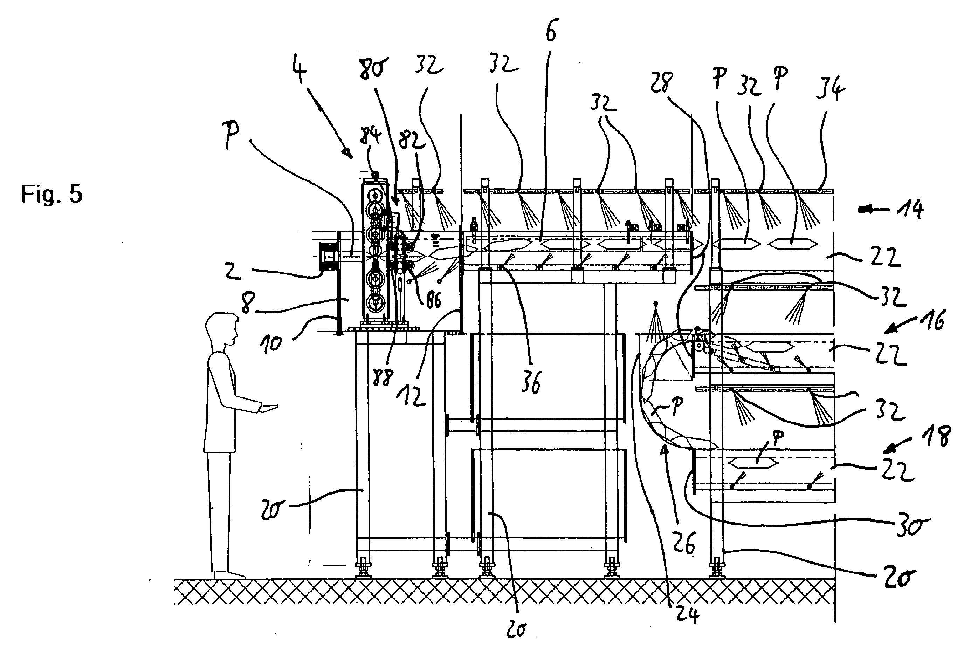

Figures 1 to 3 show a complete installation or apparatus according to the invention for producing and separating an adhesive product or similar products. As can also been seen from figures 4 and 5, the apparatus comprises a co-extrusion tool 2, a separating device 4 and a cooling path 6. The extrusion tool 2 can be of the type described in EP-A-0 957 029 of the present applicant and is connected to a source of liquid adhesive material (not shown) and a source of liquid material that later forms a protective sheath formed around an adhesive core by means of a co-extrusion process. Other liquid materials could also be used and processed in accordance with the invention. The materials are pumped from the material sources to the co-extrusion device 2.

The cooling path 6 comprises a cooling bath 8 (see figure 5) which is filled with a cooling liquid such as water and can be of a rectangular shape. The co-extrusion tool 2 is mounted to a side wall 10 of the bath 8 such that the extruded material is directly extruded into the water bath (see figure 4 or 5). The extruded product is shown as P. Through an opening in a further side wall 12 (figure 5) of the bath 8, the product can be transported further along the cooling path 6.

The cooling path 6 comprises a plurality of cooling path sections 14, 16, 18 (see figure 1 or 4) which are situated or stacked above each other on different vertical levels. Each section 14, 16, 18 is mounted on a conventional frame structure which is formed of metal bars 20, which are arranged vertically and horizontally (see figures 1 and 2). Each section 14, 16, 18 is formed of a U-shaped water basin 22.

As can be seen from figures 1 and 5, two stacked cooling path sections 14, 16, 18 are connected by guiding walls 24 which extend downwardly from the upper section to the lower section and which comprise a curved wall section 26 for gently guiding the products P downwardly into the lower cooling path section and the corresponding basin 22. Each basin 22 has a sidewall 28 (see figure 5) having an opening through which the product P can be transported. Other sidewalls 30 are formed without an opening and keep the water or other cooling liquid within the U-shaped basin 22.

A plurality of water spray nozzles 32 are arranged above each cooling path section for spraying water onto the water level and the product P, in order to convey the products P within the cooling path. The spray nozzles 32 are situated and connected to a pipe system 34 and water pressure source. Further, nozzles 36 are partially arranged within the water in the basins 22, in order to transport the products P within a water flow.

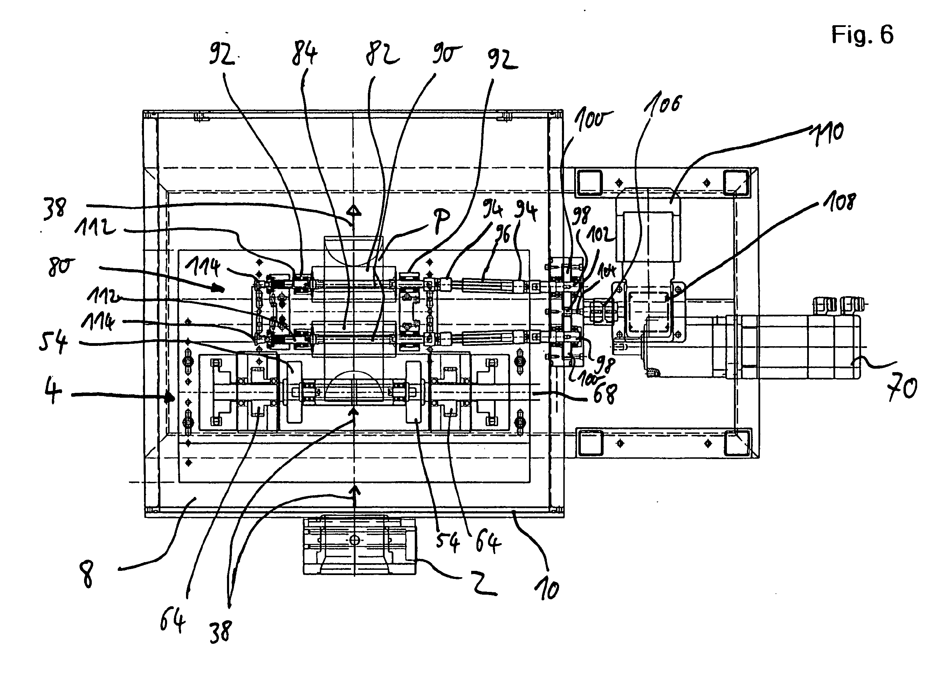

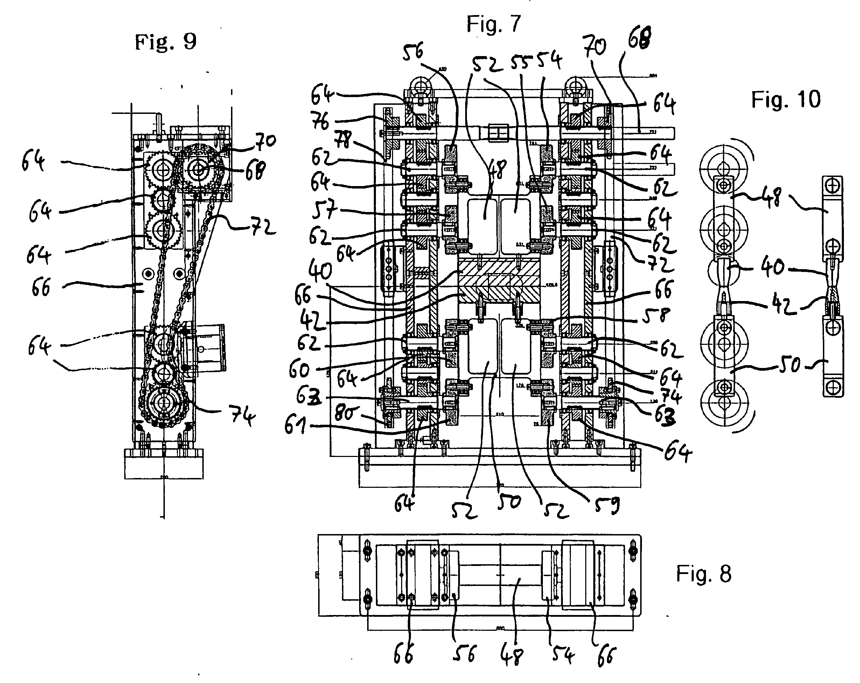

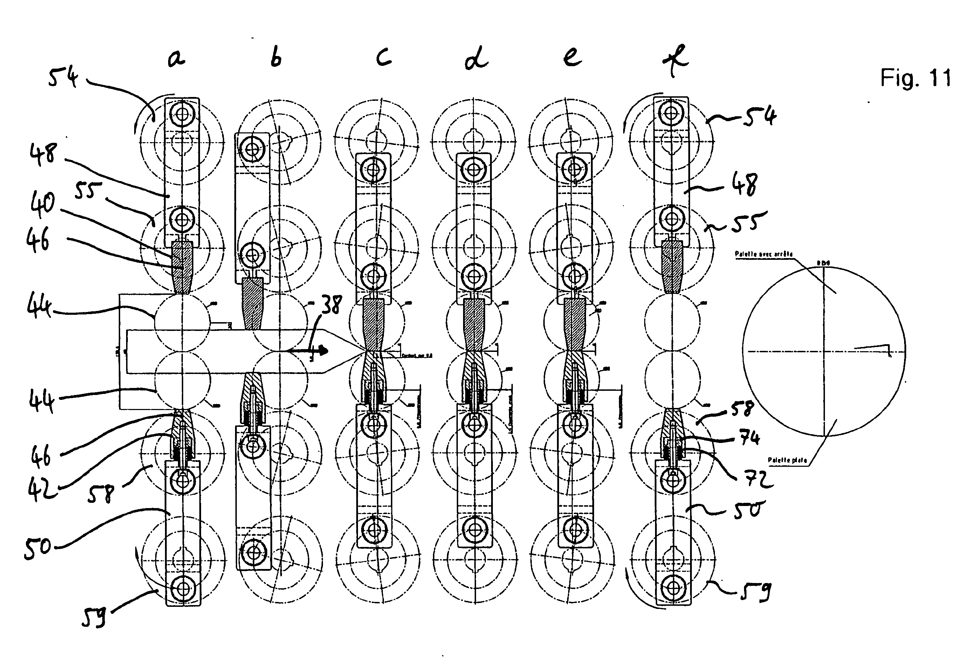

With reference to figure 5, the separating device 4 is partially immersed into the water of bath 8 and situated downstream of the co-extrusion device 2, so that a product P is extruded into the bath 8 and then is guided into the separating device 4. The products P are moved into the direction shown by arrows 38 (figure 6). As shown in figures 7 and 10, the separating device 10 comprises two separating elements 40, 42, which are moveable and arranged to perform a circular movement without changing their angular position with respect to the path of movement of the product through the separating device 38. The circular movement of the separating elements 40, 42 is illustrated in figure 11 (see number 44). The constant angular position is illustrated by vertical axis 46 of the separating elements 40, 42 which is vertical in each position, shown in sections a-f in figure 11. Although the elements 40, 42 perform a circular movement, the angular position does not change during this movement.

As can be seen from figure 7 and 11, each separating element 40, 42 is attached by means of bolts to a support structure 48, 50 having inner openings 52, so that the weight is reduced and liquid cooling material can pass with low resistance during movement. The support structure 48, 50 is coupled to four wheels 54, 55, 56, 57 and 58, 59, 60, 61 by means of roller bearings and bolts which are arranged excentrically at each wheel 54-61 with regard to the central rotational axis of each wheel. All wheels 54 to 61 are coupled to a shaft 62 and 63, respectively and driven by those shafts 62, 63. On each shaft 62, 63 a wheel or gear 64 is arranged, which meshes or is engagement with an adjacent wheel or gear, so that all wheels are synchronized. The shafts 62, 63 are supported by conventional bearings within a frame structure 66. Upper shaft 68 (figure 6, 7 and 9) extends from the right side of the frame structure 66 transversely to the left side of the frame structure 66 and is coupled to an electric motor 70 (see figure 6) and is driven by this motor 70, which is a servomotor or brushless motor. By means of a chain wheel 70 and a chain 72 and a further chain wheel 74, shaft 63 is driven to rotate wheel 59 and 58 synchronously. By means of a chain wheel 76 (figure 7) a chain 78 and chain wheel 80, shaft 63 is rotated and wheels 61 and 64 are rotated synchronously. Alternatively it would be possible to couple the wheels by electrical or electronical means, e.g. in case that wheels 54-61 are driven independently from each other by individual electromotors, each for one wheel 54-61.

With reference to figure 11, the separated elements 40, 42 are coupled to the support structure 48, 50 by means of elastic springs in the form of washer rings 72. For example, five washer rings having a V-shaped cross-section are stacked on top of each other in a non-conforming fashion, so that a spring means is formed. A distance ring 74 is located together with the washer rings 72 within a bore formed within separation elements 40, 42. Other elastic materials could alternatively be used, in order that the separating elements 40, 42 are elastically attached to the support structure 50, so that the product is not hit hard by the separation element 40, 42.

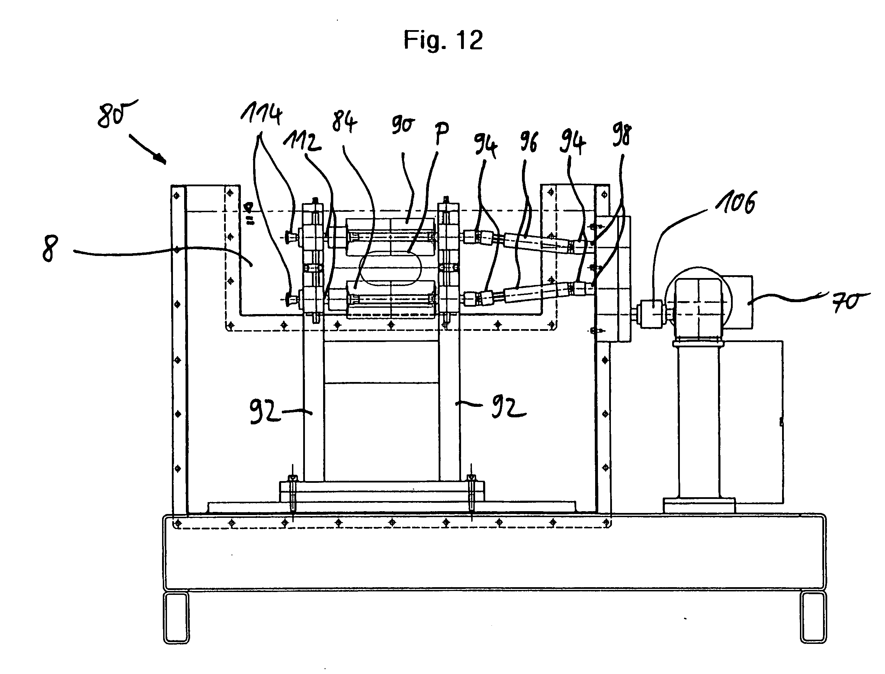

Figure 6 and 12 illustrate a transporting device 80 comprising four rollers 82, 84, 86, 88 for pulling products P into the direction of arrow 38. Each roller has an outer layer formed of a soft material such as foam, in order that the surface of product P is not destroyed. Each roller 82-88 is coupled to a shaft 90 which is supported by bearings, which are situated in a frame structure 82. Shaft 90 is coupled by cardan joints 94 to shaft 96 and shaft 96 is coupled to shaft 98. Shaft 98 can be driven by means of gears 100 which are in engagement with wheel 102 and shaft 104, which is coupled via coupling 106 to the gear box 108 of motor 110. The gears 100, 102 are arranged so that a pair of rollers, which are arranged above each other, are rotated to different directions such that the product which is between to rollers 82, 86 and 84, 88 is moved towards arrow 38.

With reference to figure 6 and 12, each roller 82-88 is coupled to a shaft 112, each of which is coupled to a knob 114. By pulling the knob 114 to the left (in figure 6) the shaft 112 is pulled out from a bore in a roller 84-88, so that the rollers can easily be dismantled and replaced, if necessary.

### The method in accordance with the invention is described as follows:

Liquid adhesive material and an outer protective sheath material are co-extruded through co-extrusion device 2 directly into the water of cooling bath 8. The outer protective material solidifies and forms an outer protective sheath, so that the liquid adhesive material is contained in the inside of the sheath 5. The product P is transported (arrow 38) between the separating elements 40, 42 (figure 11). Due to the rotational movement of wheels 54-61, the separation elements 40, 42 are moved from position a in figure 11 to position b, so that the even, flat surfaces of separating elements 40, 42 have contact with the outer surface of the product P. The axis 46 of separation element 40, 42 is always in vertical position. The product is then pinched or constricted due to the further movement from position b to position c, wherein the surfaces of the separation elements 40, 42 are almost in contact. Only a small gap is formed between the two surfaces. The material of the outer sheath is then compressed, so that a bonding or sealing of the material is achieved, so that a packet is closed. By further pressing the separating elements (in the position d), the product is separated, and subsequently the two separation elements 40, 42 are moving in opposite directions (position e and f).

Then the same cycle starts again, so that separate packets are formed. The separate packets are pulled out by means of the transporting device 80 and transported further along the cooling path 6 into a basin 22. The products P are then conveyed by means of the water spray nozzles 32 and fall down due to gravity from the top cooling path 14 along guiding wall 24 down to the middle cooling path section 16 and from there down to the lowest cooling path sections 22. The products P can be transferred out of the lower basin 22 by means of a conveyer belt or manually. The products can then be dried, if necessary and packed for further shipment.

## Claims

1. Apparatus for producing product portions, in particular individual packets of a hot melt adhesive product, comprising
an extrusion tool (2) for extruding a liquid adhesive product,
a cooling path (6) for cooling the extruded product P and
a separating device (4) for separating the extruded product P into individual packets, wherein the separating device (4) comprises at least one moveable separating element (40, 42) for constricting the extruded product P into individual packets,
**characterized in that** the separating element (40, 42) is arranged to perform a circular movement without changing its angular position with respect to a path of movement of the product through the separating device (4).

2. Apparatus according to claim 1,
**characterized in that** the extrusion tool (2) is situated adjacent to a cooling bath (8) such that the product is extruded directly into the cooling bath (8),
and that the separating device (4) is situated at least partially within the cooling bath (8), so that the extruded product P can be separated immediately after the extrusion into the water bath.

3. Apparatus according to one of the preceding claims in particular for producing an adhesive product,
**characterized in that** the movement of the separating element (40, 42) of the separating device (4) is adjusted by means of a controlling device depending upon the velocity of the extruded product P.

4. Apparatus according to any of the preceding claims,
**characterized in that** the separating element (40, 42) is mechanically coupled to two rotatable wheels (54, 55, 56, 57, 58, 59, 60, 61), which are driven synchronously and in the same direction.

5. Apparatus according to claim 4,
**characterized in that** the separation element (40, 42) is coupled to the wheels (54, 55, 56, 57, 58, 59, 60, 61) by means of a support structure (48, 50), to which the separation element (40, 42) is attached and which is attached to the two wheels (54, 55, 56, 57, 58, 59, 60, 61).

6. Apparatus according to claim 5,
**characterized in that** the support structure (48, 50) is supported by two wheels (54, 55, 56, 57, 58, 59, 60, 61) at each side and that the separation element (40, 42) extends in a direction perpendicular to the direction of movement of the extruded product P.

7. Apparatus according to any of the preceding claims,
**characterized in that** the separation device (4) comprises two cooperating separation elements (40, 42) which are arranged opposite to each other with respect to the extruded product P.

8. Apparatus according to claim 7,
**characterized in that** the movement of the two separation elements (40, 42) is synchronized by mechanical and/or electrical and/or electronical means.

9. Apparatus according to any of the preceding claims,
**characterized in that** the at least one separation element (40, 42) is driven by means of a servomotor, preferably a brushless motor.

10. Apparatus according to claim 9,
**characterized in that** the rotational speed of the motor is varied during one revolution of the separation element (40, 42).

11. Apparatus according to one of the preceding claims,
**characterized in that** the separation element (40, 42) is mechanically coupled to elastic spring means.

12. Apparatus according to one of the preceding claims,
**characterized in that** the separation element (40, 42) comprises or is coupled to an ultra sound generator.

13. Apparatus according to one of the preceding claims,
**characterized in that** the cooling path (6) comprises a plurality of cooling path sections (14, 16, 18) which are arranged at different vertical levels.

14. Apparatus according to claim 13,
**characterized in that** the cooling path sections (14, 16, 18) are stacked on top of each other.

15. Apparatus according to claim 14,
**characterized in that** the a guiding wall (24) having curved wall section (26) is situated between two stacked cooling path sections (14, 16, 18).

16. Apparatus according to any of the preceding claims,
**characterized by** at least one, preferably four rotatable rollers (82, 84, 86, 88) for transporting the separated packets from the separation device (4).

17. A method of producing product portions, in particular individual packets of a hot melt adhesive product, wherein a liquid adhesive product is extruded by means of an extrusion tool (2), the extruded product P is subsequently cooled within a cooling path (6) and separated into individual packets by means of a separating device (4) with at least one moveable separating element (40, 42) for constricting the extruded product P into individual packets,
**characterized in that** the separating element (40, 42) performs a circular movement without changing its angular position with respect to a path of movement of the product through the separating device (4).

18. Method according to claim 17,
**characterized in that** the movement of the separating element (40, 42) of the separating device (4) is adjusted by means of a controlling device depending upon the velocity of the extruded product P.

19. Method according to one of the preceding claims 17-18,
**characterized in that** the cooling path (6) comprises a plurality of cooling path sections (14, 16, 18) which are arranged at different vertical levels.

20. Method according to one of the preceding claims 17-19,
**characterized by** separating the extruded product P immediately after the extrusion by means of a separation device (4).

## Patentansprüche

1. Vorrichtung zum Erzeugen von Produkt-Portionen, insbesondere einzelner Pakete eines Heißschmelz-Klebstoffproduktes, welche aufweist:
ein Extrusionswerkzeug (2) zum Extrudieren eines flüssigen Klebstoffproduktes,
einen Kühlpfad (6) zum Kühlen des extrudierten Produktes (P) und
ein Trenngerät (4) zum Trennen des extrudierten Produktes (P) in einzelne Pakete, wobei das Trenngerät (4) wenigstens ein bewegliches Trennelement (40, 42) zum Einschnüren des extrudierten Produktes (P) in einzelne Pakete aufweist,
**dadurch gekennzeichnet, dass** das Trennelement (40, 42) angeordnet ist, um eine Kreisbewegung auszuführen, ohne seine Winkelposition in Bezug auf einen Bewegungspfad des Produktes durch das Trenngerät (4) zu verändern.

2. Vorrichtung gemäß Anspruch 1,
**dadurch gekennzeichnet, dass** das Extrusionswerkzeug (2) an ein Kühlbad (8) benachbart angeordnet ist, so dass das Produkt direkt in das Kühlbad (8) hinein extrudiert wird, und dass das Trenngerät (4) zumindest teilweise innerhalb des Kühlbades (8) angeordnet ist, so dass das extrudierte Produkt (P) unmittelbar nach der Extrusion in das Wasserbad getrennt werden kann.

3. Vorrichtung gemäß einem der vorangegangenen Ansprüche, insbesondere zum Erzeugen eines Klebstoffproduktes,
**dadurch gekennzeichnet, dass** die Bewegung des Trennelementes (40, 42) des Trenngerätes (4) mittels eines Steuergerätes abhängig von der Geschwindigkeit des extrudierten Produktes (P) eingestellt wird.

4. Vorrichtung gemäß einem der vorangegangenen Ansprüche,
**dadurch gekennzeichnet, dass** das Trennelement (40, 42) mechanisch an zwei rotierbare Räder (54, 55, 56, 57, 58, 59, 60, 61) gekoppelt ist, welche synchron und in gleicher Richtung angetrieben sind.

5. Vorrichtung gemäß Anspruch 4, **dadurch gekennzeichnet, dass** das Trennelement (40, 42) mittels einer Stütz-Struktur (48, 50) an die Räder (54, 55,56, 57, 58, 59, 60, 61) gekoppelt ist, an welcher das Trennelement (40, 42) befestigt ist, und welche an den beiden Rädern (54, 55, 56, 57, 58, 59, 60, 61) befestigt ist.

6. Vorrichtung gemäß Anspruch 5,
**dadurch gekennzeichnet, dass** die Stütz-Struktur (48, 50) von zwei Rädern (54, 55, 56, 57, 58, 59, 60, 61) auf jeder Seite gestützt ist und dass sich das Trennelement (40, 42) in einer Richtung senkrecht zu der Bewegungsrichtung des extrudierten Produktes (P) erstreckt.

7. Vorrichtung gemäß einem der vorangegangenen Ansprüche,
**dadurch gekennzeichnet, dass** das Trenngerät (4) zwei zusammenwirkende Trennelemente (40, 42) aufweist, welche einander gegenüberliegend in Bezug auf das extrudierte Produkt (P) angeordnet sind.

8. Vorrichtung gemäß Anspruch 7,
**dadurch gekennzeichnet, dass** die Bewegung der beiden Trennelemente (40, 42) durch mechanische und/oder elektrische und/oder elektronische Mittel synchronisiert ist.

9. Vorrichtung gemäß einem der vorangegangenen Ansprüche,
**dadurch gekennzeichnet, dass** das zumindest eine Trennelement (40, 42) mittels eines Servomotors angetrieben wird, vorzugsweise von einem bürstenlosen Motor.

10. Vorrichtung gemäß Anspruch 9,
**dadurch gekennzeichnet, dass** die Rotationsgeschwindigkeit des Motors während einer Umdrehung des Trennelementes (40, 42) variiert wird.

11. Vorrichtung gemäß einem der vorangegangenen Ansprüche,
**dadurch gekennzeichnet, dass** das Trennelement (40, 42) mechanisch an elastische Feder-Mittel gekoppelt ist.

12. Vorrichtung gemäß einem der vorangegangenen Ansprüche,
**dadurch gekennzeichnet, dass** das Trennelement (40, 42) einen Ultraschallgenerator aufweist oder daran gekoppelt ist.

13. Vorrichtung gemäß einem der vorangegangenen Ansprüche,
**dadurch gekennzeichnet, dass** der Kühlpfad (6) eine Mehrzahl von Kühlpfad-Abschnitten (14, 16, 18) aufweist, welche auf verschiedenen vertikalen Niveaus angeordnet sind.

14. Vorrichtung gemäß Anspruch 13,
**dadurch gekennzeichnet, dass** die Kühlpfad-Abschnitte (14, 16, 18) jeweils aufeinander gestapelt sind.

15. Vorrichtung gemäß Anspruch 14,
**dadurch gekennzeichnet, dass** eine Führungs-Wand (24) mit einem gekrümmten Wandabschnitt (26) zwischen zwei gestapelten Kühlpfad-Abschnitten (14, 16, 18) angeordnet ist.

16. Vorrichtung gemäß einem der vorangegangenen Ansprüche,
**gekennzeichnet durch** zumindest eine, vorzugsweise vier rotierbare Walzen (82, 84, 86, 88) zum Abtransport der getrennten Pakete von der Trennvorrichtung (4).

17. Verfahren zum Erzeugen von Produkt-Abschnitten, insbesondere von einzelnen Paketen eines Heißschmelz-Klebstoffproduktes, wobei ein flüssiges Klebstoff-Produkt mittels eines Extrusionswerkzeuges (2) extrudiert wird, das extrudierte Produkt (P) nachfolgend innerhalb eines Kühlpfades (6) gekühlt und mittels eines Trenngerätes (4) mit zumindest einem beweglichen Trennelement zum Einschnüren des extrudierten Produktes (P) in einzelne Pakete getrennt wird,
**dadurch gekennzeichnet, dass** das Trennelement (40, 42) eine Kreisbewegung ausführt, ohne seine Winkelposition in Bezug auf einen Bewegungspfad des Produktes durch das Trenngerät (4) zu verändern.

18. Verfahren gemäß Anspruch 17,
**dadurch gekennzeichnet, dass** die Bewegung des Trennelementes (40, 42) des Trenngerätes (4) mittels eines Steuergerätes abhängig von der Geschwindigkeit des extrudierten Produktes (P) eingestellt wird.

19. Verfahren gemäß einem der vorangegangenen Ansprüche 17 bis 18,
**dadurch gekennzeichnet, dass** der Kühlpfad (6) eine Mehrzahl von Kühlpfad-Abschnitten (14, 16, 18) aufweist, welche auf verschiedenen vertikalen Niveaus angeordnet sind.

20. Verfahren gemäß einem der vorangegangenen Ansprüche 17 bis 19,
**gekennzeichnet durch** das Trennen des extrudierten Produktes (P) unmittelbar nach der Extrusion mittels eines Trenngerätes (4).

## Revendications

1. Dispositif pour produire des parties de produits, en particulier des paquets individuels d'un adhésif thermofusible, comprenant
un outil d'extrusion (2) pour extruder un produit adhésif liquide;
un trajet de refroidissement (6) pour refroidir le produit extrudé P; et
un dispositif de séparation (4) pour séparer le produit extrudé P en des paquets individuels, le dispositif de séparation (4) comprenant au moins un élément de séparation mobile (40, 42) pour comprimer le produit extrudé P en des paquets individuels;
**caractérisé en ce que** l'élément de séparation (40, 42) est adapté pour exécuter un déplacement circulaire sans changer sa position angulaire par rapport à un trajet du déplacement du produit à travers le dispositif de séparation (4).

2. Dispositif selon la revendication 1,
**caractérisé en ce que** l'outil d'extrusion (2) est agencé près d'un bain de refroidissement (8), de sorte que le produit est extrudé directement dans le bain de refroidissement (8), et **en ce que** le dispositif de séparation (4) est agencé au moins partiellement dans le bain de refroidissement (8), de sorte que le produit extrudé P peut être séparé immédiatement après l'extrusion dans le bain d'eau.

3. Dispositif selon l'une des revendications précédentes, servant en particulier à la production d'un produit adhésif,
**caractérisé en ce que** le déplacement de l'élément de séparation (40, 42) du dispositif de séparation (4) est ajusté au moyen d'un dispositif de commande en fonction de la vitesse du produit extrudé P.

4. Dispositif selon l'une quelconque des revendications précédentes,
**caractérisé en ce que** l'élément de séparation (40, 42) est accouplé mécaniquement à deux roues rotatives (54, 55, 56, 57, 58, 59, 60, 61) entraînées de manière synchronisée et dans la même direction.

5. Dispositif selon la revendication 4,
**caractérisé en ce que** l'élément de séparation (40, 42) est accouplé aux roues (54, 55, 56, 57, 58, 59, 60, 61) au moyen d'une structure de support (48, 50), sur laquelle l'élément de séparation (40, 42) est fixé et qui est fixée sur les deux roues (54, 55, 56, 57, 58, 59, 60, 61).

6. Dispositif selon la revendication 5,
**caractérisé en ce que** la structure de support (48, 50) est supportée par deux roues (54, 55, 56, 57, 58, 59, 60, 61) au niveau de chaque côté, l'élément de séparation (40, 42) s'étendant dans une direction perpendiculaire à la direction du déplacement du produit extrudé P.

7. Dispositif selon l'une quelconque des revendications précédentes,
**caractérisé en ce que** le dispositif de séparation (4) comprend deux éléments de séparation coopérants (40, 42) agencés de manière opposée l'un à l'autre par rapport au produit extrudé P.

8. Dispositif selon la revendication 7,
**caractérisé en ce que** le déplacement des deux éléments de séparation (40, 42) est synchronisé par un moyen mécanique et/ou électrique et/ou électronique.

9. Dispositif selon l'une quelconque des revendications précédentes,
**caractérisé en ce que** le au moins un élément de séparation (40, 42) est entraîné par un servomoteur, de préférence un moteur sans balais.

10. Dispositif selon la revendication 9,
**caractérisé en ce que** la vitesse de rotation du moteur est changée au cours d'une rotation de l'élément de séparation (40, 42).

11. Dispositif selon l'une des revendications précédentes,
**caractérisé en ce que** l'élément de séparation (40, 42) est accouplé mécaniquement à des moyens de ressort élastiques.

12. Dispositif selon l'une des revendications précédentes,
**caractérisé en ce que** l'élément de séparation (40, 42) comprend un générateur d'ultrasons ou est accouplé à celui-ci.

13. Dispositif selon l'une des revendications précédentes,
**caractérisé en ce que** le trajet de refroidissement (6) comprend plusieurs sections de trajet de refroidissement (14, 16, 18), agencées à différents niveaux verticaux.

14. Dispositif selon la revendication 13,
**caractérisé en ce que** les sections du trajet de refroidissement (14, 16, 18) sont empilées les unes au-dessus des autres.

15. Dispositif selon la revendication 14,
**caractérisé en ce qu'**une paroi de guidage (24) comportant une section de paroi courbée (26) est située entre deux sections empilées du trajet de refroidissement (14, 16, 18).

16. Dispositif selon l'une quelconque des revendications précédentes,
**caractérisé par** au moins un, de préférence quatre rouleaux rotatifs (82, 84, 86, 88), destinés à transporter les paquets séparés à partir du dispositif de séparation (4).

17. Procédé de production de parties de produits, en particulier de paquets individuels d'un adhésif thermofusible, dans lequel un produit adhésif liquide est extrudé au moyen d'un outil d'extrusion (2), le produit extrudé P étant ensuite refroidi dans un trajet de refroidissement (6) et séparé en des paquets individuels au moyen d'un dispositif de séparation (4), avec au moins un élément de séparation mobile (40, 42) servant à comprimer le produit extrudé P en des paquets individuels;
**caractérisé en ce que** l'élément de séparation (40, 42) exécute un déplacement circulaire sans changer sa position angulaire par rapport au trajet de déplacement du produit à travers le dispositif de séparation (4).

18. Procédé selon la revendication 17,
**caractérisé en ce que** le déplacement de l'élément de séparation (40, 42) du dispositif de séparation (4) est ajusté au moyen d'un dispositif de commande en fonction de la vitesse du produit extrudé P.

19. Procédé selon l'une des revendications précédentes 17 à 18,
**caractérisé en ce que** le trajet de refroidissement (6) comprend plusieurs sections de trajet de refroidissement (14, 16, 18), agencées à différents niveaux verticaux.

20. Procédé selon l'une des revendications précédentes 17 à 18,
**caractérisé par** la séparation du produit extrudé P immédiatement après l'extrusion au moyen d'un dispositif de séparation (4).
